# EUROPÄISCHE PATENTSCHRIFT

(11) **EP 1 618 146 B1**
(45) Veröffentlichungstag und Bekanntmachung des Hinweises auf die Patenterteilung: **17.08.2011**
(21) Anmeldenummer: 04725314.1
(22) Anmeldetag: 02.04.2004
(51) Int. Cl.: C08K 5/41, C08K 5/42, C08K 5/17, C08K 5/00

(54) **STABILISATORSYSTEM ZUR STABILISIERUNG HALOGENHALTIGER POLYMERE**
STABILISER SYSTEM FOR THE STABILISATION OF HALOGENATED POLYMERS
SYSTEME DE STABILISATEURS SERVANT A STABILISER DES POLYMERES HALOGENES

(30) Priorität: 26.04.2003 DE 10318910
(43) Veröffentlichungstag der Anmeldung: 25.01.2006
(73) Patentinhaber: Galata Chemicals GmbH, 68623 Lampertheim (DE)
(72) Erfinder: WEHNER, Wolfgang, 64673 Zwingenberg (DE); FRIEDRICH, Hans-Helmut, 64686 Lautertal-Gadernheim (DE); KUHN, Karl-Josef, 64686 Lautertal-Gadernheim (DE); HOPFMANN, Thomas, 68623 Lampertheim (DE)
(74) Vertreter: Wibbelmann, Jobst
(86) Internationale Anmeldenummer: PCT/EP2004/003486
(87) Internationale Veröffentlichungsnummer: WO 2004/096904

(56) Entgegenhaltungen:
- EP-A1- 0 607 972
- EP-A1- 0 607 972
- WO-A-02/48249
- WO-A-03/048233
- DD-A- 145 018
- DD-A3- 145 018
- DE-U- 29 924 285
- US-A- 3 120 505
- US-A- 3 796 675

## Beschreibung

Die Erfindung betrifft Stabilisatormischungen bestehend aus einem Sulfatestersalz oder Sulfonatsalz und einem Alkanolamin, die sich zur Stabilisierung halogenhaltiger Polymere eignen.

Zum Beispiel kann PVC als halogenhaltiges Polymer durch eine Reihe von Zusatzstoffen stabilisiert werden. Verbindungen der Schwermetalle Blei, Barium und Cadmium sind dafür besonders gut geeignet, sind jedoch heute aus ökologischen Gründen oder wegen ihres Schwermetallgehalts umstritten (vgl. "Plastics Additives Handbook" H. Zweifel, Carl Hanser Verlag, 5. Aufl., 2001, Seiten 427 - 483, und "Kunststoff Handbuch PVC", Band 2/1, W. Becker/D. Braun, Carl Hanser Verlag, 2. Aufl., 1985, Seiten 531 - 538; sowie Kirk-Othmer: "Encyclopedia of Chemical Technology", 4th Ed., 1994, Vol. 12, Heat Stabilizers, S. 1071 - 1091).

Man sucht daher weiter nach wirksamen Stabilisatoren und Stabilisatormischungen, welche frei von Blei, Barium und Cadmium sind.

Es wurde nun gefunden, daß sich Mischungen aus mindestens einem Alkanolamin der allgemeinen Formel (II) und mindestens einem Sulfatestersalz und/oder Sulfonatsalz der Formel (I), insbesondere einem (Erd)/Alkali-Salz, besonders gut zur Stabilisierung von chlorhaltigen Polymeren, insbesondere PVC, eignen.

Die PCT-Anmeldung WO 02/48249 A2 offenbart ein Stabilisatorsystem zur Stabilisierung von halogenhaltigen Polymeren gegen thermisch induzierten Abbau, insbesondere PVC bestehend aus einem Perchlorat Salz und einem Alkanolamin. Die Verwendung von Sulfatestersalzen und/oder Sulfonatsalzen wird nicht offenbart.

Patentschrift US 3,120,505 beschreibt ein Verfahren zur Herstellung von PVC Emulsionen, wobei die Emulsionen PVC-Partikel, ein Alkalimetallalkylsulfat, wie z.B. Natriumlaurylsulfat, und Alkanolamine enthalten und Alkanolamine als Ammoniumkationen als Gegenion des Alkylsulfats eingesetzt werden.

Aus der Patentschrift US 3,796,675 ist eine Mischung zur Herstellung von geschäumten Produkten, insbesondere auf der Basis von Vinylchlorid bekannt, enthaltend Sulfate und Sulfonate wie z.B. Natriumlaurylsulfat und Alkanolaminalkylsulfate, wobei die verwendeten Substanzen als oberflächenaktive Stoffe eingesetzt werden.

Ein Gegenstand der vorliegenden Erfindung sind daher Stabilisatormischungen zur Stabilisierung von chlorhaltigen Polymeren, bestehend aus
a) einem Sulfatestersalz oder Sulfonatsalz der Formel (I)

   [R(O)ₛSO₃]ₜM (I)

   ; und
b) einem Alkanolamin der Formel (II) 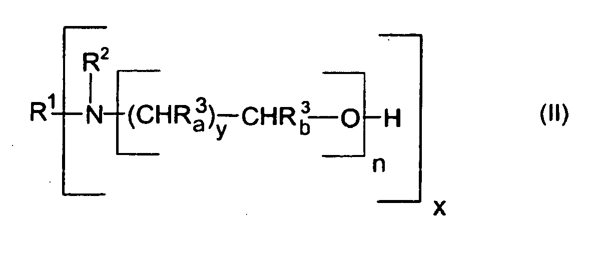 worin bedeuten: M = Alkali-, Erdalkali-, Lanthanoid-(Cer-) oder Aluminumkation, t = Valenz des Metallkations nämlich 1, 2 oder 3; s = 0 oder 1 und R = C₁-C₂₂-alkyl, Phenyl, C₇-C₁₀-Phenylalkyl, C₇-C₂₄-Alkylphenyl und
   x=1, 2 oder 3;
   y = 1, 2, 3, 4; 5 oder 6;
   n=1 - 10;
   R¹,R² = unabhängig voneinander H, C₁-C₂₂-Alkyl, -[-(CHR³ₐ)_{y}-CHR³_{b}-O-]ₙ-H, -[-(CHR³ₐ)_{y}-CHR³_{b}-O-]ₙ-CO-R⁴, C₂-C₂₀-Alkenyl, C₂-C₁₈-Acyl, C₄-C₈-Cycloalkyl, welches in ß-Stellung OH-substituiert sein kann, C₆-C₁₀-Aryl, C₇-C₁₀-Alkaryl oder C₇-C₁₀-Aralkyl, oder wenn x = 1, können R¹ und R² zusätzlich zusammen mit dem N einen geschlossenen 4-10 gliedrigen Ring aus Kohlenstoffatomen und gegebenenfalls bis zu 2 Heteroatomen bilden, oder wenn x = 2, kann R¹ zusätzlich für C₂-C₁₈-Alkylen stehen, das an beiden ß-Kohlenstoff-atomen mit OH substituiert und/oder durch 1 oder mehrere O-Atome und/oder 1 oder mehrere NR²-Gruppen unterbrochen sein kann, oder für dihydroxysubstituiertes Tetrahydro-dicyclopentadienylen, dihydroxysubstituiertes Ethyl-cyclohexanylen, dihydroxysubstituiertes 4,4'-(Bisphenol-A-dipropylether)ylen, Isophoronylen, Dimethylcyclohexanylen, Dicyclohexylmethanylen oder 3,3'-Dimethyldicyclohexyl-methanylen stehen, und wenn x = 3, kann R¹ zusätzlich für trihydroxysubstituiertes (Tri-N-propylisocyanurat)triyl stehen; R³ₐ,R³_{b} = unabhängig voneinander C₁-C₂₂-Alkyl, C₂-C₆-Alkenyl, C₆-C₁₀-Aryl, H oder CH₂-X-R⁵ , wobei X = O, S, -O-CO- oder -CO-O-;
   R⁴ = C₁-C₁₈-Alkyl/Alkenyl oder Phenyl; und
   R⁵ = H, C₁-C₂₂-Alkyl, C₂-C₂₂-Alkenyl oder C₆-C₁₀-Aryl,

Bei den Alkanolaminen der allgemeinen Formel (II) handelt es sich z.B. um Verbindungen mit R¹,R² = Methyl, Ethyl, Propyl, Butyl, Cyclohexyl, Octyl, Lauryl, Tetradecyl, Hexadecyl, Stearyl, Oleyl, Allyl, Phenyl oder Benzyl, Hydroxyalkyl und R³ = H, Methyl, Ethyl, Propyl oder Butyl. Bevorzugt sind Alkanolamine mit R¹ = Lauryl, Tetradecyl, Hexadecyl, Stearyl, Oleyl, wobei R² = Hydroxyalkyl ist. Weiter können Ethoxylate und Propoxylate von Triethanol- und Triisopropanolamin sowie Fettaminen pflanzlicher oder tierischer Provenienz eingesetzt werden. Bevorzugt sind Trialkanolamine und Mono-Alkyl-/Alkenyl-Dialkanolamine mit R³ = H oder Methyl und y = 1, insbesondere Fettamine, die zweifach mit Ethylen- oder Propylenoxid umgesetzt wurden.

Es zeigte sich, dass sich Verbindungen der allgemeinen Formel (II) mit y = 1-6, d.h. mit bis zu 6 Methylengruppen zwischen der Aminogruppe und dem hydroxysubstituierten Kohlenstoffatom, zur Verwendung als PVC-Stabilisator in Kombination mit einem Sulfatestersalz und/oder Sulfonatsalz eignen.

Erfindungsgemäß können auch Verbindungen der allgemeinen Formel (II) eingesetzt werden mit x = 3, die also drei Hydroxyalkylaminogruppen pro Molekül aufweisen. Ein Beispiel dafür ist ein Umsetzungsprodukt von Trisglycidylisocyanurat mit Mono- oder Diethanolamin oder Mono- oder Diisopropanolamin.

Die Alkanolamine der allgemeinen Formel (II) sind käufliche Chemikalien oder können nach bekannten Methoden durch N-Alkylierung eines entsprechenden Amins oder Ammoniak hergestellt werden (vgl. Alkanolamines in Kirk-Othmer Encyclopedia of Chemical Technology, 4th Edition, J. Wiley & Sons N.Y., 1992, Vol 2, Seiten 1 - 34).

Beispiele für die bevorzugten Alkanolamine der allgemeinen Formel (II) sind Tris(2-hydroxyethyl)amin, Tris(2-hydroxy-1-propyl)amin, Bis(2-hydroxyethyl)-2-hydroxy-1-propylamin, N-n-Butyl-N,N-bis(2-hydroxyethyl)amin, N,N-Bis(n-butyl)-N-(2-hydroxyethyl)amin, N-(3-n-Butyloxy-2-hydroxy-1-propyl)-N,N-bis(2-hydroxyethyl)amin, N-(1,3-dihydroxy-2-hydroxymethyl-2-propyl)-N,N-bis(2-hydroxyethyl)amin, N,N-Bis(2-hydroxyethyl)-N-palmitylamin, N,N-Bis(2-hydroxyethyl)-N-oleylamin, N,N-Bis(2-hydroxyethyl)-N-stearylamin, N-(2-Hydroxyethyl)morpholin oder N-(2,3-dihydroxy-1-propyl)morpholin, Bis-hydroxyethylpiperazin oder Bishydroxyisopropylpiperazin und Umsetzungsprodukte von Glycidylethern mit mono-, di-Alkylamin oder Ammoniak sowie den davon abgeleiteten Alkanolaminen, wie beispielsweise Ethanolamin, Diethanolamin, n-Propanolamin, i-Propanolamin, n-Dipropanolamin oder i-Diisopropanolamin.

Ganz besonders bevorzugt sind Additionsprodukte von Olefinoxiden wie Octen-, Decen-, Dodecen-, Tetradecen-, Hexadecen-, Octadecen-, Eicosen- und Docosenoxid sowie Epoxystearylalkohol mit Diethanol- oder Diisopropanolamin. Diese Verbindungen mit ß-ständiger OH-Funktion an beiden Enden einer längeren Alkylkette wie z. B. N-(2-Hydroxyhexadecyl)-diethanolamin, N-(2-Hydroxy-3-octyloxypropyl)diethanolamin, N-(2-Hydroxy-3-decyloxypropyl)diethanolamin, N-(2-Hydroxy-3-octyloxypropyl)diethanolamin und Bis-N-(2-Hydroxy-3-phenyloxypropyl)ethanolamin eignen sich besonders als Komponente in den erfindungsgemäßen Stabilisatorsystemen.

Die Aufzählung ist nur beispielhaft und erhebt nicht den Anspruch auf Vollständigkeit.

Die Sulfatestersalze und/oder Sulfonatsalze sind dem Fachmann bekannt (vgl. Sulfonation and Sulfation, Sulfonic Acids Sulfuric and Sulfurous esters and surfactants in Kirk-Othmer Encyclopedia of Chemical Technology, 4th Edition, J. Wiley & Sons N.Y., 1992, Vol. 23, Seiten 146 - 193, 194 - 217, 409 - 428 und 478 - 541). Beispiele sind diejenigen der Formel [R(O)ₛSO₃]ₜM, wobei M für Li, Na, K, Mg, Ca, Sr, Ba, Zn, Al, La oder Ce steht.

Die Sulfatestersalze und/oder Sulfonatsalze können dabei in verschiedenen gängigen Darreichungsformen (Formulierungen) eingesetzt werden; z.B. als Salz oder als Lösung in Wasser oder einem organischen Solvens bzw. aufgezogen auf ein Trägermaterial wie PVC, Ca-Silikat, Zeolithe oder Hydrotalcite. Beispiele für solche Formulierungen sind auch z.B. Sulfatester- und/oder Sulfonatsalze, die mit Alkoholen (Polyolen, Cyclodextrinen) oder Ätheralkoholen bzw. Esteralkoholen oder Kronenether komplexiert oder gelöst sind.

Vorzugsweise werden Natrium und/oder Kaliumsulfatester- und/oder -Sulfonatsalze verwendet. Bevorzugt sind Salze des Monomethyl-, -ethyl-, -propyl-, -butyl-, -hexyl-, -octyl-, -isooctyl-, -decyl-, -lauryl-, -hexadecyl- und -octadecylesters der Schwefelsäure und/oder Salze der Methan-, Ethan-, Benzol-, Toluol- und C₈-C₁₄-alkylbenzolsulfonsäure.

Ein weiterer Gegenstand sind Kombinationen der erfindungsgemäßen Stabilisatormischungen mit mindestens einem anderen üblichen Additiv bzw. Stabilisator, Kombinationen der Stabilisator-mischungen bestehend aus einem Sulfatestersalz oder Sulfonatsalz der allgemeinen Formel (I) und mindestens einer Verbindung der allgemeinen Formel (II) mit mindestens einem anderen üblichen Additiv bzw. Stabilisator. Bevorzugt sind Phosphite, Polyole und Disaccharidalkohole, Glycidylverbindungen, Hydrotalcite, Zeolithe (Alkali bzw. Erdalkalialumosilikate), Füllstoffe, Metallseifen, Alkali und Erdalkali-Verbindungen, Gleitmittel, Weichmacher, Pigmente, epoxidierte Fettsäureester und andere Epoxidverbindungen, Antioxidantien, UV-Absorber, Lichtschutzmittel, optische Aufheller und Treibmittel.

Besonders bevorzugt sind epoxidierte Fettsäureester und andere Epoxidverbindungen, Polyole, Erdalkaliseifen, Zeolithe, Hydrotalcite und Phosphite. Ganz besonders bevorzugt sind Phosphite, Phosphite in Kombination mit Polyolen, entwässerte Hydrotalcite sowie Zeolithe.

Mitumfasst sind auch die möglichen Reaktionsprodukte der eingesetzten Komponenten.

Bevorzugt sind auch Stabilisatormischungen, die zusätzlich ein Aminouracil, Enamin, ein Indol oder einen Harnstoff enthalten. Beispiele für geeignete Verbindungen sind 1,3-Dimethyl-4-aminouracil, 1,4-Butandiol-bis(β-aminocrotonat), Thiodiethylenglycoi-bis(β-aminocrotonat), 2-Phenylindol, 2-Phenyllaurylindol, N,N'-Diphenylthioharnstoff. Weitere Beispiele sind in der deutschen Patentanmeldung 101 07 329 des Anmelders beschrieben.

Beispiele für solche zusätzlichen Komponenten sind weiter unten aufgeführt und erläutert (vgl. "Handbook of PVC-Formulating" von E. J. Wickson, John Wiley & Sons, New York 1993).

### Polyole und Disaccharidalkohole

Als Verbindungen dieses Typs kommen beispielsweise in Betracht:
Pentaerythrit, Dipentaerythrit, Tripentaerythrit, Trimethylolethan, Bistrimethylolpropan, Polyvinylalkohol, Bistrimethylolethan, Trimethylolpropan,Zucker, Zuckeralkohole. Bevorzugt sind davon die Disaccharidalkohole.

Verwendung finden können auch Polyolsirupe, wie Sorbit-, Mannit- und Maltitsirup.

Die Polyole können in einer Menge von beispielsweise 0,01 bis 20, zweckmäßig von 0,1 bis 20 und insbesondere von 0,1 bis 10 Gew.-Teilen, bezogen auf 100 Gew.-Teile PVC, angewandt werden.

### Glycidylverbindungen

Sie enthalten die Glycidylgruppe 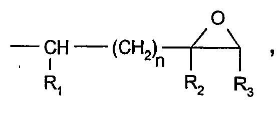 wobei diese direkt an Kohlenstoff, Sauerstoff-, Stickstoff- oder Schwefelatome gebunden ist, und worin entweder R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂-bedeuten, R₂ dann Wasserstoff und n = 0 oder 1 ist.

Vorzugsweise finden Glycidylverbindungen mit zwei funktionellen Gruppen Verwendung. Es können aber auch prinzipiell Glycidylverbindungen mit einer, drei oder mehr funktionellen Gruppen eingesetzt werden.

Vorwiegend werden Diglycidylverbindungen mit aromatischen Gruppen eingesetzt.

Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

### Hydrotalcite

Die chemische Zusammensetzung dieser Verbindungen ist dem Fachmann bekannt, z. B. aus den Patentschriften DE 3 843 581, US 4,000,100, EP 0 062 813 und WO 93/20135.

Verbindungen aus der Reihe der Hydrotalcite können durch die folgende allgemeine Formel

M²⁺₁₋ₓ M³⁺ₓ(OH)₂ (A^{b-})_{x/b} · d H₂O

beschrieben werden, wobei
M²⁺ = eines oder mehrere der Metalle aus der Gruppe Mg, Ca, Sr, Zn oder Sn ist,
M³⁺ = Al, oder B ist,
Aⁿ ein Anion mit der Valenz n darstellt,
b eine Zahl von 1 - 2 ist,
0<x0,5 ist,
d eine Zahl von 0 - 20 ist.
Bevorzugt sind Verbindungen mit
Aⁿ = OH⁻, ClO₄⁻, HCO₃⁻, CH₃COO⁻, C₆H₅COO⁻, CO₃²⁻,
(CHOHCOO)₂²⁻, (CH₂COO)₂²⁻, CH₃CHOHCOO⁻, HPO₃⁻ oder HPO₄²⁻_{.}

Beispiele für Hydrotalcite sind

Al₂O₃·6MgO.CO₂·12H₂O (i), Mg_{4,5}Al₂(OH)₁₃·CO₃·3,5H₂O (ii), 4MgO·Al₂O₃·CO₂·9H₂O (iii), 4MgO·Al₂O₃·CO₂·6H₂O, ZnO·3MgO·Al₂O₃·CO₂·8-9H₂O und ZnO·3MgO·Al₂O₃·CO₂·5-6H₂O.

Ganz besonders bevorzugt sind die Typen Alkamizer 2, Alkamizer P 93-2 (ex Kyowa) und L-CAM (Lithium-modifizierter Hydrotalcit, ex Fuji). Bevorzugt werden entwässerte Hydrotalcite eingesetzt.

### Zeolithe Alkali bzw. Erdalkalialumosilikate)

Sie können durch die folgende allgemeine Formel M_{x/n}[(AlO₂)ₓ(SiO₂)_{y}]·wH₂O beschrieben werden, worin n die Ladung des Kations M;

M ein Element der ersten oder zweiten Hauptgruppe, wie Li, Na, K, Mg, Ca, Sr oder Ba;

y : x eine Zahl von 0,8 bis 15, bevorzugt von 0,8 bis 1,2; und
w eine Zahl von 0 bis 300, bevorzugt von 0,5 bis 30, ist.

Beispiele für Zeolithe sind Natriumalumosilikate der Formeln Na₁₂Al₁₂Si₁₂O₄₈ · 27 H₂O [Zeolith A], Na₆Al₆Si₆O₂₄ · 2 NaX · 7,5 H₂O, X= OH, Halogen, ClO₄ [Sodalith]; Na₆Al₆Si₃₀O₇₂ · 24 H₂O; Na₈Al₈Si₄₀O₉₆ · 24 H₂O; Na₁₆Al₁₆Si₂₄O₈₀ · 16 H₂O; Na₁₆Al₁₆Si₃₂O₉₆ · 16 H₂O; Na₅₆Al₅₆Si₁₃₆O₃₈₄ · 250 H₂O [Zeolith Y], Na₈₆Al₈₆Si₁₀₆O₃₈₄ · 264 H₂O [Zeolith X];
oder die durch teilweisen bzw. vollständigen Austausch der Na-Atome durch Li-, K-, Mg-, Ca-, Sr- oder Zn-Atome darstellbaren Zeolithe wie (Na,K)₁₀Al₁₀Si₂₂O₆₄ · 20 H₂O ; Ca_{4,5}Na₃[(AlO₂)₁₂(SiO₂)₁₂] · 30 H₂O; K₉Na₃[(AlO₂)₁₂(SiO₂)₁₂] · 27 H₂O.
Ganz besonders bevorzugt sind Na-Zeolith A und Na-Zeolith P.
Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymere, angewandt werden.

### Füllstoffe

Füllstoffe wie beispielsweise Calciumcarbonat, Dolomit, Wollastonit, Magnesiumoxid, Magnesiumhydroxid, Silikate, China-Clay, Talk, Glasfasern, Glaskugeln, Holzmehl, Glimmer, Metalloxide, oder Metallhydroxide, Ruß, Graphit, Gesteinsmehl, Schwerspat, Glasfasern, Talk, Kaolin und Kreide verwandt. Bevorzugt ist Kreide (HANDBOOK OF PVC FORMULATING E. J. Wickson, John Wiley & Sons, Inc., 1993, SS. 393 - 449) und Verstärkungsmittel (TASCHENBUCH der Kunststoffadditive, R. Gächter & H. Müller, Carl Hanser, 1990, S. 549 - 615).

Die Füllstoffe können in einer Menge von vorzugsweise mindestens 1 Teil, beispielsweise 5 bis 200, zweckmäßig 5 bis 150 und insbesondere 5 bis 100 Gew.-Teilen, bezogen auf 100 Gew.-Teile PVC, eingesetzt werden.

### Metallseifen

Metallseifen sind in der Hauptsache Metallcarboxylate, bevorzugt längerkettiger Carbonsäuren. Geläufige Beispiele sind Stearate und Laurate, auch Oleate und Salze kürzerkettiger aliphatischer oder aromatischer Carbonsäuren wie Essigsäure, Propionsäure, Buttersäure, Valeriansäure, Hexansäure, Sorbinsäure; Oxalsäure, Malonsäure, Bernsteinsäure, Glutarsäure, Adipinsäure, Fumarsäure, Zitronensäure, Benzoesäure, Salicylsäure, Phthalsäuren, Hemimellithsäure, Trimellithsäure, Pyromellithsäure.

Als Metalle seien genannt: Li, Na, K, Mg, Ca, Sr, Ba, Zn, Al, La, Ce und Seltenerdmetalle. Oft verwendet man sogenannte synergistische Mischungen wie Barium/Zink-, Magnesium/Zink-, Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5th Ed., Vol. A16 (1985), S. 361 ff.).

Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden.

### Alkali und Erdalkali-Verbindungen

Darunter versteht man vornehmlich die Carboxylate der oben beschriebenen Säuren, aber auch entsprechende Oxide bzw. Hydroxide oder Carbonate. Es kommen auch deren Gemische mit organischen Säuren in Frage. Beispiele sind LiOH, NaOH, KOH, CaO, Ca(OH₂), MgO, Mg(OH)₂, Sr(OH)₂, Al(OH)₃, CaCO₃ und MgCO₃ (auch basische Carbonate, wie beispielsweise Magnesia Alba und Huntit), sowie fettsaure Na- und K-Salze. Bei Erdalkali- und Zn-Carboxylaten können auch deren Addukte mit MO oder M(OH)₂ (M = Ca, Mg, Sr oder Zn), sogenannte "overbased" Verbindungen, zum Einsatz kommen. Bevorzugt werden zusätzlich zu den erfindungsgemäßen Stabilisatoren Alkali-, Erdalkali-und/oder Aluminiumcarboxylate eingesetzt.

### Gleitmittel

Als Gleitmittel kommen beispielsweise in Betracht: Montanwachs, Fettsäureester, PE-Wachse, Amidwachse, Chlorparaffine, Glycerinester oder Erdalkaliseifen, ferner Fettketone sowie Gleitmittel auf oder Kombinationen davon, wie in EP 0 259 783 aufgeführt. Bevorzugt ist Calciumstearat.

### Weichmacher

Als organische Weichmacher kommen beispielsweise solche aus den folgenden Gruppen in Betracht:
A) Phthalsäureester: wie bevorzugt Di-2-ethylhexyl-, Di-iso-nonyl- und Di-isodecylphthalat, die auch unter den gebräuchlichen Abkürzungen DOP (Dioctylphthalat, Di-2-ethylhexyl-phthalat), DINP (Diisononylphthalat), DIDP (Diisodecylphthalat) bekannt sind.
B) Ester aliphatischer Dicarbonsäuren, insbesondere Ester von Adipin-, Azelain- und Sebazinsäure: wie bevorzugt Di-2-ethylhexyladipat und Di-isooctyladipat.
C) Trimellithsäureester, beispielsweise Tri-2-ethylhexyltrimellithat, Tri-isodecyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat.
D) Epoxyweichmacher: In der Hauptsache sind das epoxidierte ungesättigte Fettsäuren wie z. B. epoxidiertes Sojabohnenöl.
E) Polymerweichmacher: Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.
F) Phosphorsäureester: Eine Definition dieser Ester ist im vorstehend genannten "Taschenbuch der Kunststoffadditive" Kapitel 5.9.5, S. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexyl-phosphat sowie Reofos^{®} 50 und 95 (Ciba Spezialitätenchemie.
G) Chlorierte Kohlenwasserstoffe (Paraffine)
H) Kohlenwasserstoffe
I) Monoester, z. B. Butyloleat, Phenoxyethyloleat, Tetrahydrofurfuryloleat und Alkylsulfonsäureester
J) Glykolester, z. B. Diglykolbenzoate.

Eine Definition dieser Weichmacher und Beispiele für solche sind in "Kunststoffadditive", R. Gächter/H. Müller, Carl Hanser Verlag, 3. Aufl., 1989, Kapitel 5.9.6, Seiten 412 - 415, sowie in "PVC Technology ", W. V. Titow, 4th. Ed., Elsevier Publ., 1984, Seiten 165 - 170 angegeben. Es können auch Mischungen unterschiedlicher Weichmacher verwandt werden.

Die Weichmacher können in einer Menge von beispielsweise 5 bis 20 Gew.-Teilen, zweckmäßig 10 bis 20 Gew.-Teilen, bezogen auf 100 Gew.-Teile PVC, angewandt werden. Hart- bzw. Halbhart-PVC enthält bevorzugt bis zu 10 %, besonders bevorzugt bis zu 5 % oder keinen Weichmacher.

### Pigmente

Geeignete Stoffe sind dem Fachmann bekannt. Beispiele für anorganische Pigmente sind TiO₂, Pigmente auf Zirkonoxidbasis, BaSO₄, Zinkoxid (Zinkweiss) und Lithopone (Zinksulfid/Bariumsulfat), Ruß, Russ-Titandioxid-Mischungen, Eisenoxidpigmente, Sb₂O₃, (Ti,Ba,Sb)O₂, Cr₂O₃, Spinelle wie Cobaltblau und Cobaltgrün, Cd(S,Se), Ultramarinblau. Organische Pigmente sind z. B. Azopigmente, Phthalocyaninpigmente, Chinacridonpigmente, Perylenpigmente, Diketo-pyrrolopyrrolpigmente und Anthrachinonpigmente. Bevorzugt ist TiO₂ auch in mikronisierter Form. Eine Definition und weitere Beschreibungen finden sich im "Handbook of PVC Formulating", E. J.Wickson, John Wiley & Sons, New York, 1993.

### Phosphite

Organische Phosphite sind bekannte Co-Stabilisatoren für chlorhaltige Polymere. Beispiele sind Trioctyl-, Tridecyl-, Tridodecyl-, Tritridecyl-, Tripentadecyl-, Trioleyl, Tristearyl-, Triphenyl-, Trilauryl-, Trikresyl-, Trisnonylphenyl-, Tris-2,4-t-butyl-phenyl- oder Tricyclohexylphosphit. Weitere geeignete Phosphite sind verschieden gemischte Aryl-dialkyl. bzw. Alkyl-diarylphosphite wie Phenyldi-octyl-, Phenyldidecyl-, Phenyldidodecyl-, Phenylditride-cyl-, Phenylditetradecyl-, Phenyldipentadecyl-, Octyldiphenyl-, Decyldiphenyl-, Undecyldiphenyl-, Dodecyldiphenyl-, Tridecyldiphenyl-, Tetradecyldiphenyl-, Pentadecyldiphenyl-, Oleyldiphenyl-, Stearyldiphenyl- und Dodecyl-bis-2,4-di-t-butylphenylphosphit. Weiterhin können auch Phosphite verschiedener Di- bzw. Polyole vorteilhaft verwandt werden: z. B. Tetraphenyldipropylenglykoldiphosphit, Poly(dipropylenglykol)phenylphosphit, Tetra-isodecyl-dipropylenglykoldiphosphit, Tris-dipropylenglykolphosphit, Tetramethylolcyclohexanol-decyldiphosphit, Tetramethylolcyclohexanol-butoxyethoxy-ethyldiphosphit, Tetramethylolcyclohexanol-nonylphenyldiphosphit, Bis-nonylphenyl-ditrimethylolpropandiphosphit, Bis-2-butoxyethyl-di-trimethylolpropandiphosphit, Trishydroxyethylisocyanurat-hexadecyltriphosphit, Didecylpentaerythritdiphosphit, Distearylpentaerythritdiphosphit, Bis-2,4-di-t-butylphenylpentaerythritdiphosphit, sowie Gemische dieser Phosphite und Aryl/alkylphosphit-Gemische der statistischen Zusammensetzung (H₁₉C₉-C₆H₄)O_{1,5}P(OC_{12,13}H_{25,27})_{1,5} oder [C₈H₁₇-C₆H₄-O-]₂P[i-C₈H₁₇O],(H₁₉C₉-C₆H₄)O₁,₅P(OC_{9,11}H_{19,23})_{1,5}-Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

### Epoxidierte Fettsäureester und andere Epoxidverbindungen

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat. Ebenso verwendet werden können epoxidiertes Polybutadien und Polyisopren, gegebenenfalls auch in partiell hydroxylierter Form, oder Glycidylacrylat und Glycidylmethacrylat als Homo- bzw. Copolymer. Diese Epoxyverbindungen können auch auf eine Alumosalz-Verbindung aufgebracht sein; siehe hierzu auch DE-A-4 031 818.

### Antioxidantien

Alkylierte Monophenole, z. B. 2,6-Di-tert-butyl-4-methylphenol, Alkylthiomethylphenole, z. B. 2,4-Di-octylthiomethyl-6-tert-butylphenol, Alkylierte Hydrochinone, z. B. 2,6-Di-tert-butyl-4-methoxyphenol, Hydroxylierte Thiodiphenylether, z. B. 2,2'-Thio-bis-(6-tert-butyl-4-methylphenol), Alkyliden-Bisphenole, z. B. 2,2'-Methylen-bis-(6-tert-butyl-4-methylphenol), Benzylverbindungen, z. B. 3,5,3',5'-Tetra-tert-butyl-4,4'-dihydroxydibenzylether, Hydroxybenzylierte Malonate, z. B. Dioctadecyl-2,2-bis-(3,5-di-tert-butyl-2-hydroxybenzyl)-malonat, Hydroxybenzyl-Aromaten, z. B. 1,3,5-Tris-(3,5-di-tert-butyl-4-hydroxybenzyl)-2,4,6-trimethylbenzol, Triazinverbindungen, z. B. 2,4-Bis-octylmercapto-6-(3,5-di-tert-butyl-4-hydroxyanilino)-1,3,5-triazin, Phosphonate und Phosphonite, z. B. Dimethyl-2,5-di-tert-butyl-4-hydroxybenzylphosphonat, Acylaminophenole, z. B. 4-Hydroxy-laurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dicyclohexyl-4-hydroxyphenyl)-propionsäure, Ester der 3,5-Di-tert-butyl-4-hydroxyphenylessigsäure mit ein-oder mehrwertigen Alkoholen, Amide der beta-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, Vitamin E (Tocopherol) und Abkömmlinge.

Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden.

### UV-Absorber und Lichtschutzmittel

Beispiele dafür sind: 2-(2'-Hydroxyphenyl)-benztriazole, wie z. B. 2-(2'-Hydroxy-5'-methylphenyl)-benztriazol, 2-Hydroxybenzophenone, Ester von gegebenenfalls substituierten Benzoesäuren, wie z. B. 4-tert-Butyl-phenylsalicylat, Phenylsalicylat, Acrylate, Nickelverbindungen, Oxalsäurediamide, wie z. B. 4,4'-Di-octyloxy-oxanilid, 2,2'-Di-octyloxy-5,5'-di-tert-butyl-oxanilid, 2-(2-Hydroxyphenyl)-1,3,5-triazine, wie z. B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, Sterisch gehinderte Amine, wie z. B. Bis(2,2,6,6-tetramethyl-piperidin-4-yl)-sebacat, Bis(2,2,6,6-tetramethyl-piperidin-4-yl)-succinat.

### Treibmittel

Treibmittel sind z. B. organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.

Definitionen und Beispiele für Schlagzähmodifikatoren und Verarbeitungshilfen, Geliermittel, Antistatika, Biocide, Metalldesaktivatoren, optische Aufheller, Flammschutzmittel, Antifogging-agents sowie Kompatibilisatoren sind beschrieben in "Kunststoffadditive", R. Gächter/H. Müller, Carl Hanser Verlag, 3. Aufl., 1989, sowie 4. Aufl. 2001 und im "Handbook of Polyvinyl Chloride Formulating" E. J. Wilson, J. Wiley & Sons, 1993, sowie in "Plastics Additives" G. Pritchard, Chapman & Hall, London, 1st Ed., 1998. Schlagzähmodifikatoren sind ferner ausführlich beschrieben in "Impact Modifiers for PVC", J. T. Lutz/D. L. Dunkelberger, John Wiley & Sons, 1992.

Ein weiterer Gegenstand sind Zusammensetzungen, die ein chlorhaltiges Polymer und eine erfindungsgemäße Stabilisatormischung enthalten.

Bei diesen Zusammensetzungen sind die Verbindungen der allgemeinen Formeln (II) zur Erzielung der Stabilisierung im chlorhaltigen Polymer zweckmäßig zu 0,01 bis 10, vorzugsweise zu 0,05 bis 5, bezogen auf 100 Gew.-Teile PVC, zu verwenden.

Die Sulfatestersalze und/oder Sulfonatsalze können in einer Menge von beispielsweise 0,001 bis 10, zweckmäßig 0,01 bis 5, besonders bevorzugt 0,01 bis 3 Gew.-Teilen, bezogen auf 100 Gew.-Teile PVC, angewandt werden.

Bevorzugt sind Zusammensetzungen, bei denen das Verhältnis von der Verbindung der allgemeinen Formel (II) zum Sulfatestersalz und/oder Sulfonatsalz, bezogen auf das Gewicht, im Bereich von 1.5:1 bis 10:1 1 liegt.

Beispiele für die zu stabilisierenden chlorhaltigen Polymere sind: Polymere des Vinylchlorides, Vinylidenchlorids, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alphasubstituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate mit polymerisierbaren Verbindungen wie Acrylnitril, Vinylacetat oder ABS zu verstehen, wobei es sich um Suspensions-, Masse- oder Emulsionspolymerisate handeln kann.
Bevorzugt ist ein PVC-Homopolymer, auch in Kombination mit Polyacrylaten.

Ferner kommen auch Pfropfpolymerisate von PVC mit EVA, ABS und MBS in Betracht. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitril-Butadien; NAR: Acrylnitril-Acrylat; EVA: Ethylen-Vinylacetat. Es kommen insbesondere auch Styrol-Acrylnitril-Copolymerisate auf Acrylat-Basis (ASA) in Betracht.

Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen, aus (i) 100 Gewichtsteilen PVC, und (ii) 0 -300 Gewichtsteilen ABS und/oder mit SAN modifiziertes ABS und 0-80

Gewichtsteilen der Copolymeren NBR, NAR und/oder EVA, insbesondere jedoch EVA.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat.

Die erfindungsgemäß mitverwendbaren Verbindungen sowie die chlorhaltigen Polymeren sind dem Fachmann allgemein bekannt und werden detailliert beschrieben in "Kunstoffadditive", R. Gächter/H. Müller, Carl Hanser Verlag, 3. Aufl., 1989; in der DE 197 41 778 und der EP-A 0 967 245, auf welche hiermit ausdrücklich Bezug genommen wird.

Die-erfindungsgemäße Stabilisierung eignet sich für chlorhaltige Polymerzusammensetzungen, die nicht weichgemachte resp. weichmacherfreie oder im wesentlichen weichmacherfreie Zusammensetzungen darstellen, als auch für weichgemachte Zusammensetzungen.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Folien (auch Luvitherm), PVC-Rohre, Profile, Sidings, Fittings, Bürofolien und Apparatur-Gehäuse (Computer, Haushaltsgeräte).

Bevorzugte andere Zusammensetzungen, in Form von Weich-Rezepturen sind für Drahtummantelungen, Kabelisolierungen, Dekorationsfolien, Dachfolien, Schaumstoffe, Agrarfolien, Schläuche, Dichtungsprofile, Fußböden, KFZ-Teile, Weich-Folien, Spritzgussteile, Bürofolien und Folien für Traglufthallen geeignet. Beispiele für die Anwendung der erfindungsgemäßen Zusammensetzungen als Plastisole sind Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Luvitherm-Folien.

Zweckmäßig kann die Einarbeitung der Stabilisatoren nach folgenden Methoden erfolgen: als Emulsion oder Dispersion (eine Möglichkeit ist z. B. die Form einer pastösen Mischung, ein Vorteil der erfindungsgemäßen Kombination besteht bei dieser Darreichungsform in der Stabilität der Paste); als Trockenmischung während des Vermischens von Zusatzkomponenten oder Polymermischungen; durch direktes Zugeben in die Verarbeitungsapparatur (z. B. Kalander, Mischer, Kneter, Extruder und dergleichen) oder als Lösung oder Schmelze bzw. als Flakes oder Pellets in staubfreier Form als One-Pack.

Das erfindungsgemäß stabilisierte PVC, kann auf an sich bekannte Weise hergestellt werden, wozu man unter Verwendung an sich bekannter Vorrichtungen wie der oben genannten Verarbeitungsapparaturen die erfindungsgemäße Stabilisatormischung und gegebenenfalls weitere Zusätze mit dem PVC vermischt. Hierbei können die Stabilisatoren einzeln oder in Mischung zugegeben werden oder auch in Form sogenannter Masterbatches.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen oder Spinnen, ferner Extrusions-Blasen. Das stabilisierte PVC kann auch zu Schaumstoffen verarbeitet werden. Gegenstand der Erfindung ist somit auch ein Verfahren zur Stabilisierung chlorhaltiger Polymere durch Zusatz der erfindungsgemäßen Stabilisatormischung zu einem chlorhaltigen Polymer, wie auch Gegenstände, die PVC enthalten, das durch die erfindungsgemäße Stabilisator-mischung stabilisiert ist.

Ein erfindungsgemäß stabilisiertes PVC eignet sich z. B. besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Folien (auch Luvitherm), PVC-Rohre, Profile, Sidings, Fittings, Bürofolien und Apparatur-Gehäuse (Computer, Haushalteräte). Das erfindungsgemäße PVC eignet sich besonders für Halbhart- und Weich-Rezepturen, insbesondere in Form von Weichrezepturen für Drahtummantelungen, Kabelisolierungen, Fußböden, Tapeten, KFZ-Teile, Weich-Folien, Spritzgussteile oder Schläuche, welche besonders bevorzugt sind. In Form von Halbhart-Rezepturen eignet sich das erfindungsgemäße PVC besonders für Dekorationsfolien, Schaumstoffe, Agrarfolien, Schläuche, Dichtungsprofile und Bürofolien.
Beispiele für die Anwendung des erfindungsgemäßen PVC als Plastisol sind Kunstleder, Fußböden, Textilbeschichtungen, Tapeten, Coil-Coatings- und Unterbodenschutz für Kraftfahrzeuge.

Beispiele für Sinter-PVC-Anwendungen des erfindungsgemäß stabilisierten PVC sind Slush, Slush-Mould und Coil-Coatings für Plastisol-, Halbhart- und WeichRezepturen.

Näheres hierzu siehe "Kunststoffhandbuch PVC", Band 2/2, W. Becker/H. Braun, 2. Aufl., 1985, Carl Hanser Verlag, Seiten 1236 - 1277.

Die folgenden Beispiele erläutern die Erfindung, ohne sie jedoch zu beschränken. Teile- und Prozentangaben beziehen sich, wie auch in der übrigen Beschreibung, auf das Gewicht.

**Tabelle 1: Stabilisatoren (I)**

| Stabilisator | Formel |
|---|---|
| 1 | CH₃-O-SO₃Na (50%ig in H₂O) |
| 2 | 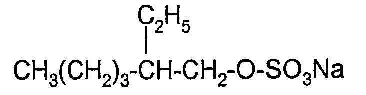 (50%ig in H₂O) |
| 3 | CH₃(CH₂)₁₁O-SO₃Na |
| 4 | CH₃(CH₂)₁₁SO₃Na |
| 5 | 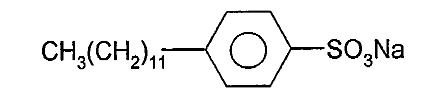 |
| 6 | 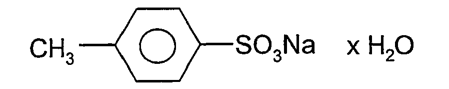 |

### Beispiel 1: Statischer Hitzetest

### Eine Mischung bestehend aus

| | |
|---|---|
| 100,0 Teile | Evipol (Markenzeichen der Fa. EVC) SH 7020 - PVC K-Wert 70 |
| 47,0 Teile | Dioctylphthalat |
| 3,0 Teile | ESO = epoxidiertes Sojabohnenöl |
| 0,3 Teile | Loxiol^{®} G 71 S = Pentaerythrit-Adipat-Komplexester - Gleitmittel |
| 0,1 Teile | Kalziumstearat |
| x Teile | eines in Tabelle 1 angegebenen Stabilisators |

und 0,6 Teile Triethanolamin (TEA) wurden auf einem Mischwalzwerk 5 Minuten bei 180 °C gewalzt. Vom gebildeten Walzfell wurden Testfolienstreifen von 0,5 mm Dicke entnommen. Die Folienproben wurden in einem Ofen (= Mathis-Thermo-Takter) bei 190 °C thermisch belastet. Im zeitlichen Abstand von 3 Minuten wurde der Yellowness Index (YI) nach ASTMD 1925-70 bestimmt. Die Ergebnisse sind der Tabelle 2 zu entnehmen. Gegebenenfalls wurde dem Gemisch 0,6 Teile CH 300 = gemischtes Aryl/Alkyl-Phosphit ex Crompton zugesetzt (vgl. Tabelle 2). Geringe YI-Werte bedeuten eine gute Stabilisierung.

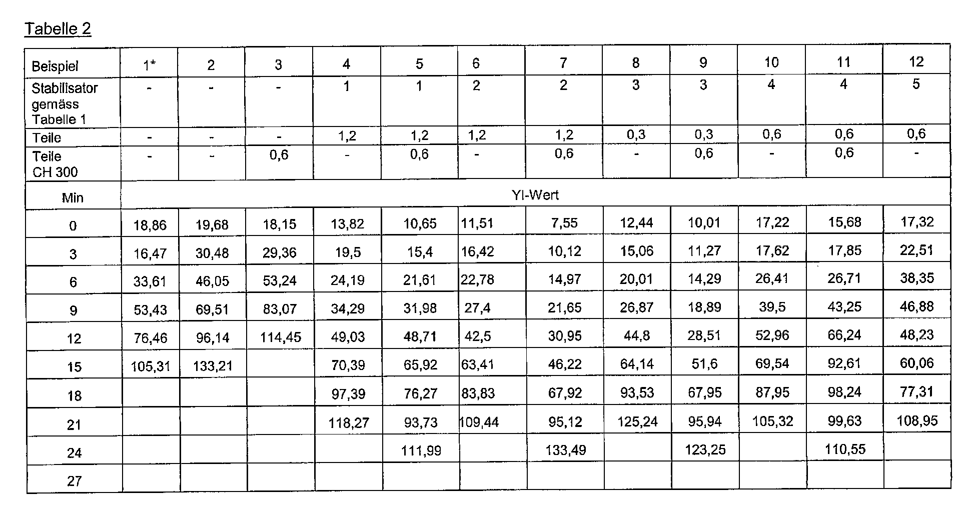

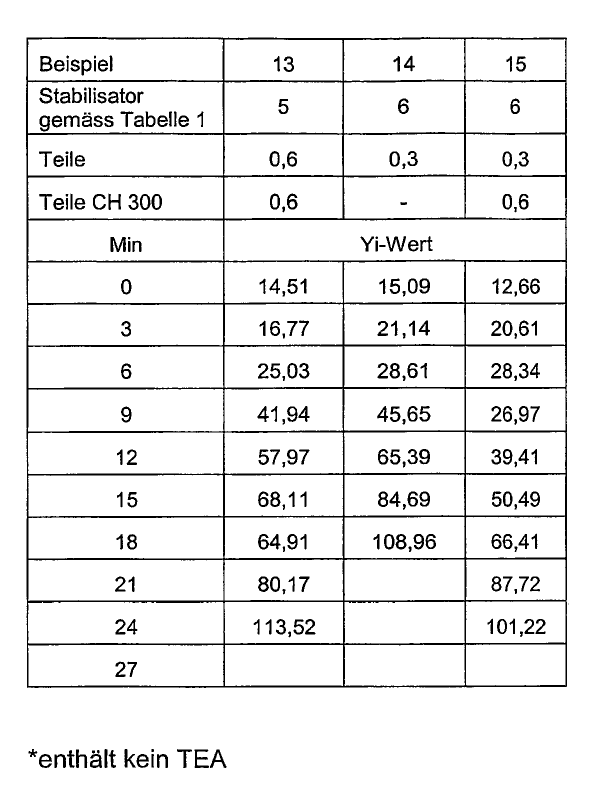

### Beispiel 2: Statischer Hitzetest

### Eine Mischung bestehend aus

| | |
|---|---|
| 100,0 Teile | Evipol (Markenzeichen der Fa. EVC) SH 7020 - PVC K-Wert 70 |
| 47,0 Teile | Dioctylphthalat |
| 3,0 Teile | ESO = epoxidiertes Sojabohnenöl |
| 0,3 Teile | Loxiol^{®} G 71 S = Pentaerythrit-Adipat-Komplexester - Gleitmittel |
| 0,1 Teile | Kalziumstearat |
| x Teile | eines in Tabelle 1 angegebenen Stabilisators |

und 0,3 Teile Triethanolamin (TEA) wurden auf einem Mischwalzwerk 5 Minuten bei 180 °C gewalzt. Vom gebildeten Walzfell wurden Testfolienstreifen von 0,5 mm Dicke entnommen. Die Folienproben wurden in einem Ofen (= Mathis-Thermo-Takter) bei 190 °C thermisch belastet. Im zeitlichen Abstand von 3 Minuten wurde der Yellowness Index (YI) nach ASTMD 1925-70 bestimmt. Die Ergebnisse sind der Tabelle 2 zu entnehmen. Gegebenenfalls wurde dem Gemisch 0,6 Teile CH 300 = gemischtes Aryl/Alkyl-Phosphit ex Crompton zugesetzt (vgl. Tabelle 3). Geringe YI-Werte bedeuten eine gute Stabilisierung.

**Tabelle 3**

| Beispiel | 16 | 17* | 18 | 19 |
|---|---|---|---|---|
| Stabilisator gemäss Tabelle 1 | - | 3 | 3 | 3 |
| Teile | - | 0,15 | 0,15 | 0,15 |
| Teile CH 300 | - | 0,6 | - | 0,6 |
| | YI-Wert | | | |
| 0 | 18,81 | 22,77 | 13,33 | 10,62 |
| 3 | 22,51 | 24,91 | 14,53 | 10,5 |
| 6 | 32,57 | 29,29 | 22,53 | 12,39 |
| 9 | 47,33 | 36,67 | 31,69 | 15,97 |
| 12 | 68,18 | 51,94 | 48,96 | 24,38 |
| 15 | 99,19 | 70,81 | 77,07 | 49,93 |
| 18 | 124,85 | 85,81 | 109,68 | 84,83 |
| 21 | | 99,95 | | 117,19 |
| 24 | | 114,17 | | |
| 27 | | | | |

| | | | | |
|---|---|---|---|---|
| * enthält kein TEA | | | | |

### Beispiel 3: PVC-Preßplatte

Eine Mischung bestehend aus

| | |
|---|---|
| 100,0 Teile | Evipol (Markenzeichen der Fa. EVC) SH 7020 - PVC K-Wert 70 |
| 47,0 Teile | Dioctylphthalat |
| 3,0 Teile | ESO = epoxidiertes Sojabohnenöl |
| 0,3 Teile | Loxiol^{®} G 71 S = Pentaerythrit-Adipat-Komplexester - Gleitmittel |
| 0,1 Teile | Kalziumstearat |
| 0,3 Teile | Triethanolamin (TEA) |
| x Teile | eines in Tabelle 1 angegebenen Stabilisators |

wurden auf einem Mischwalzwerk 5 Minuten bei 180 °C gewalzt. Vom gebildeten Walzfell wurde eine Pressplatte bei 180 °C in einer vorgeheizten Etagen-Plattenpresse verpresst. Stärke der Pressplatte 2 mm, Pressdauer 2 Minuten. Von dieser Pressplatte wurde der Yellowness Index (YI) nach ASTMD 1925-70 und die Transparenz in % nach ASTM D 2805-80 gemessen. Die Ergebnisse sind der Tabelle 4 zu entnehmen. Geringe YI-Werte bedeuten eine gute Stabilisierung bzw. Anfangsfarbe. Hohe Prozentzahlen bedeuten eine gute Transparenz.

**Tabelle 4**

| Beispiel | 20 | 21 * | 22 | 23 |
|---|---|---|---|---|
| Stabilisator (I) gemäss Tabelle 1 | - | 3 | 3 | 3 |
| Teile | - | 0,15 | 0,15 | 0,15 |
| Teile CH 300 | - | 0,6 | - | 0,6 |
| YI-Wert | 88,3 | 70,6 | 50,3 | 29,7 |
| Transparenz | 83,1 | 92,4 | 94,3 | 96,3 |

| | | | | |
|---|---|---|---|---|
| * enthält kein TEA | | | | |

Es zeigt sich, dass die Verwendung von Sulfatestersalz/Sulfonatsalz (Formel I) in Kombination mit Triethanolamin (Formel II) zu einer guten Stabilisierung führt. Durch Kombination mit Phosphit (CH 300) kann die Stabilität weiter erhöht werden.

## Patentansprüche

1. Verwendung einer Stabilisatormischung zur Stabilisierung von chlorhaltigen Polymeren, wobei die Stabilisatormischung mindestens umfasst
a) ein Sulfatestersalz oder Sulfonatsalz der Formel (I)
[R(O)₂SO₃]ₜM (I)
b) und ein Alkanolamin der Formel (II) 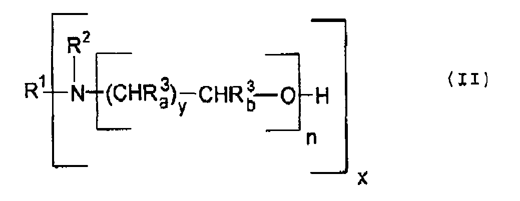 worin bedeuten: M = Alkali-, Erdalkali-, Lanthanoid-(Cer-) oder Aluminumkation, t = Valenz des Metallkations nämlich 1, 2 oder 3; s = 0 oder 1 und R = C₁-C₂₂-alkyl, Phenyl, C₇-C₁₀-Phenylalkyl, C₇-C₂₄-Alkylphenyl
und
x = 1, 2 oder 3;
y = 1, 2, 3, 4, 5 oder 6;
n = 1-10;
R¹, R² = unabhängig voneinander H, C₁-C₂₂-Alkyl, -[-(CHR³ₐ)_{y}-CHR³_{b}-O-]ₙ-H, -[-(CHR³ₐ)_{y}-CHR³_{b}-O-]ₙ-CO-R⁴, C₂-C₂₀-Alkenyl, C₂-C₁₈-Acyl, C₄-C₈-Cycloalkyl, welches in ß-Stellung OH-substituiert sein kann, C₆-C₁₀-Aryl, C₇-C₁₀-Alkaryl oder C₇-C₁₀-Aralkyl, oder wenn x = 1, können R¹ und R² zusätzlich zusammen mit dem N einen geschlossenen 4-10 gliedrigen Ring aus Kohlenstoffatomen und gegebenenfalls bis zu 2 Heteroatomen bilden, oder wenn x = 2, kann R¹ zusätzlich für C₂-C₁₈-Alkylen stehen, das an beiden ß-Kohlenstoff-atomen mit OH substituiert und/oder durch 1 oder mehrere O-Atome und/oder 1 oder mehrere NR²-Gruppen unterbrochen sein Kann, oder für dihydroxysubstituiertes Tetrahydro-dicyclopentadienylen, dihydroxysubstituiertes Ethyl-cyclohexanylen, dihydroxysubstituiertes 4,4'-(Bisphenol-A-dipropylether)ylen, Isophoronylen, Dimethylcyclohexanylen, Dicyclohexylmethanylen oder 3,3'-Dimethyldicyclohexyl-methanylen stehen, und wenn x = 3, kann R¹ zusätzlich für trihydroxysubstituiertes (Tri-N-propylisocyanurat)triyl stehen;
R³ₐ,R³_{b} = unabhängig voneinander C₁-C₂₂-Alkyl, C₂-C₆-Alkenyl, C₆-C₁₀-Aryl, H oder CH₂-X-R⁵ , wobei X = O, S,
-O-CO- oder -CO-O-;
R⁴ = C₁,C₁₈-Alkyl/Alkenyl oder Phenyl; und
R⁵ = H, C₁-C₂₂-Alkyl, C₂-C₂₂-Alkenyl oder C₆-C₁₀-Aryl.

2. Verwendung gemäß Anspruch 1, wobei in der Verbindung mit der allgemeinen Formel (II)
R³ₐ und R³_{b} unabhängig voneinander H oder CH₃ sind und y = 1 ist.

3. Verwendung nach einem der Ansprüche 1 oder 2, wobei in der Verbindung mit der allgemeinen Formel (II)
R¹ = R² = CH₂-CHR³_{b}-OH ist.

4. Verwendung nach einem der Ansprüche 1 bis 3, wobei die Verbindungen der allgemeinen Formel (II) Tris(2-hydroxy-1-propyl)amin, Tris(2-hydroxyethyl)amin, Bis(2-hydroxyethyl)-2-hydroxy-1-propyl)amin oder Alkyl/Alkenyl-bis(2-hydroxyethyl)amin, N-Oleyl-bis(2-hydroxyethyl)amin, N-(2-Hydroxyhexadecyl)diethanolamin, N-(2-hydroxy-3-octyloxy-propyl)diethanolamin, N-(2-hydroxy-3-decyloxy-propyl)diethanolamin oder Gemische hiervor sind.

5. Verwendung nach einem der Ansprüche 1 bis 4, wobei in dem Sulfatestersalz oder Sulfonatsalz M = Na oder K und t = 1 ist.

6. Verwendung gemäß einem der vorstehenden Ansprüche, **dadurch gekennzeichnet, dass** das chlorhaltige Polymer Weich-PVC darstellt.

7. Verwendung gemäß einem der Ansprüche 1 bis 5, **dadurch gekennzeichnet, dass** das chlorhaltige Polymer Hart-PVC darstellt.

8. Stabilisatormischung zur Stabilisierung von chlorhaltigen Polymeren, bestehend aus
a) einem Sulfatestersalz oder Sulfonatsalz der Formel (1)
[R(O)ₛSO₃]ₜM (I);
b) einem Alkanolamin der Formel (II) 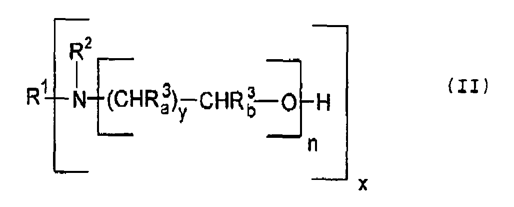 worin bedeuten: M = Li, Na, K, Mg, Ca, Sr, Ba, Zn, Al, La oder Ce, t = Valenz des Metalikations nämlich 1, 2 oder 3; s = 0 oder 1 und R = C₁-C₂₂-alkyl, Phenyl, C₇-C₁₀-Phenylalkyl, C₇-C₂₄-Alkylphenyl
und
x = 1, 2 oder 3;
y = 1, 2, 3, 4, 5 oder 6;
n=1-10;
R¹, R² = unabhängig voneinander H, C₁-C₂₂-Alkyl, -[-(CHR³ₐ)_{y}-CHR³_{b}-O-]ₙ-H, -[-(CHR³ₐ)_{y}-CHR³_{b}-O-]ₙ-CO-R⁴, C₂-C₂₀-Alkenyl, C₂-C₁₈-Acyl, C₄-C₈-Cycloalkyl, welches in ß-Stellung OH-substituiert sein kann, C₆-C₁₀-Aryl, C₇-C₁₀-Alkaryl oder C₇-C₁₀-Aralkyl, oder wenn x =1, können R¹ und R² zusätzlich zusammen mit dem N einen geschlossenen 4-10 gliedrigen Ring aus Kohlenstoffatomen und gegebenenfalls bis zu 2 Heteroatomen bilden, oder wenn x = 2, kann R¹ zusätzlich für C₂-C₁₈Alkylen stehen, das an beiden ß-Kohlenstoff-atomen mit OH substituiert und/oder durch 1 oder mehrere O-Atome und/oder 1 oder mehrere NR²-Gruppen unterbrochen sein kann, oder für dihydroxysubstituiertes Tetrahydro-dicyclopentadienylen, dihydroxysubstituiertes Ethyl-cyclohexanylen, dihydroxysubstituiertes 4,4'-(Bisphenol-A-dipropylether)ylen, Isophoronylen, Dimethylcyclohexanylen, Dicyclohexylmethanylen oder 3,3'-Dimethyldicyclohexyl-methanylen stehen, und wenn x = 3, kann R¹ zusätzlich für trihydroxysubstituiertes (Tri-N-propylisocyanurat)triyl stehen;
R³ₐ,R³_{b} = unabhängig voneinander C₁-C₂₂-Alkyl, C₂-C₆-Alkenyl, C₆-C₁₀-Aryl, H oder CH₂-X-R⁵ , wobei X = O, S,
-O-CO- oder -CO-O-;
R⁴ = C1-c₁₈-AlkyllAlkenyl oder Phenyl; und
R⁵ = H, C₁-C₂₂-Alkyl, C₂-C₂₂-Alkenyl oder C₆-C₁₀-Aryl; und

9. Stabilisatormischung gemäß Anspruch 8, wobei in der Verbindung mit der allgemeinen Formel (II)
R³ₐ und R³_{b} unabhängig voneinander H oder CH₃ sind und y = 1 ist.

10. Stabilisatormischung nach einem der Ansprüche 8 oder 9, wobei in der Verbindung mit der allgemeinen Formel (II)
R¹ = R² = CH₂-CHR³_{b}-OH ist.

11. Stabilisatormischung nach einem der Ansprüche 8 bis 10, wobei die Verbindungen der allgemeinen Formel (II) Tris(2-hydroxy-1-propyl)amin, Tris(2-hydroxyethyl)amin, Bis(2-hydroxyethyl)-2-hydroxy-1-propyl)amin oder Alkyl/Akenyl-bis(2-hydroxyethyl)amin, N-Oleyl-bis(2-hydroxyethyl)amin, N-(2-Hydroxyhexadecyl)diethanolamin, N-(2-hydroxy-3-octyloxy-propyl)diethanolamin, N-(2-hydroxy-3-decyloxy-propyl)diethanolamin oder Gemische davon sind.

12. Stabilisatormischung nach einem der Ansprüche 8 bis 11, wobei in dem Sulfatestersalz oder Sulfonatsalz M = Na oder K und t = 1 ist.

## Claims

1. Use of a stabilizer mixture for stabilizing chlorine-containing polymers, the stabilizer mixture comprising at least
a) a sulfate ester salt or sulfonate salt of formula (I)
[R(O)ₛSO₃]ₜM (I)
b) and an alkanolamine of formula (II) 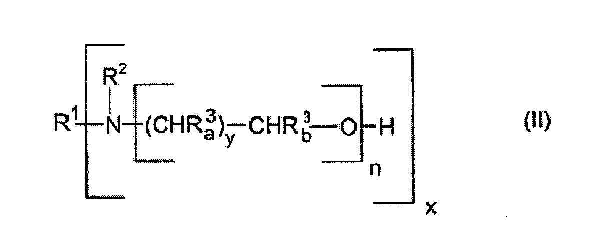 wherein: M = alkali, alkaline earth, lanthanoid-(cerium-) or aluminum cation, t = valency of the metal cation, namely 1, 2 or 3; s = 0 or 1 and R = C₁-C₂₂ alkyl, phenyl, C₇-C₁₀ phenylalkyl, C₇-C₂₄ alkylphenyl
and
x = 1, 2 or 3;
y = 1, 2, 3, 4, 5 or 6;
n = 1-10;
R¹, R² = independently of one another H, C₁-C₂₂ alkyl, -[-(CHR³ₐ)_{y}-CHR³_{b}-O-]ₙ-H, -[-(CHR³a)_{y}-CHR³_{b}-O-]ₙ-CO-R⁴, C₂-C₂₀ alkenyl, C₂-C₁₈ acyl, C₄-C₈ cycloalkyl, which may be OH-substituted in the ß position, C₆-C₁₀ aryl, C₇-C₁₀ alkaryl or C₇-C₁₀ aralkyl, or when x=1, R¹ and R² together with the N may additionally form a closed 4-10 membered ring of carbon atoms and optionally up to 2 heteroatoms, or when x=2, R¹ may additionally stand for C₂-C₁₈ alkylene which may be OH-substituted at both ß-carbon atoms and/or may be interrupted by 1 or more O-atoms and/or 1 or more NR₂ groups, or for dihydroxy-substituted tetrahydrodicyclopentadienylene, dihydroxy-substituted ethylcyclohexanylene, dihydroxy-substituted 4,4'-(bisphenol A-dipropyl ether)ylene, isophoronylene, dimethylcyclohexanylene, dicyclohexylmethanylene or 3,3'-dimethyldicyclohexylmethanylene, and if x=3, R¹ may additionally stand for trihydroxy-substituted (tri-N-propyl isocyanurate)triyl;
R³ₐ, R³_{b} = independently of one another C₁-C₂₂ alkyl, C₂-C₆ alkenyl, C₆-C₁₀ aryl, H or CH₂-X-R⁵, wherein X = 0, S, -O-CO- or -CO-O-;
R⁴ = C₁-C₁₈ alkyl/alkenyl or phenyl; and
R⁵ = H, C₁-C₂₂ alkyl, C₂-C₂₂ alkenyl or C₆-C₁₀ aryl.

2. Use according to claim 1, wherein in the compound of general formula (II) R³ₐ and R³_{b} are, independently of one another, H or CH₃, and y = 1.

3. Use according to claim 1 or 2, wherein in the compound of formula (II) R¹ = R² = CH₂-CHR³_{b}-OH.

4. Use according to any of claims 1 to 3, wherein the compounds of general formula (II) are tris(2-hydroxy-1-propyl)amine, tris(2-hydroxyethyl)amine, bis(2-hydroxyethyl)(2-hydroxy-1-propyl)amine or alkyl/alkenyl-bis(2-hydroxyethyl)amine, N-oleyl-bis(2-hydroxyethyl)amine, N-(2-hydroxyhexadecyl)-diethanolamine, N-(2-hydroxy-3-octyloxypropyl)-diethanoiamine, N-(2-hydroxy-3-decyloxypropyl)diethanolamine or mixtures thereof.

5. Use according to any of claims 1 to 4, wherein in the sulfate ester salt or sulfonate salt
M = Na or K and t = 1.

6. Use according to any of the preceding claims, **characterized in that** the chlorine-containing polymer represents plasticized PVC.

7. Use according to any of claims 1 to 5, **characterized in that** the chlorine-containing polymer represents unplasticized PVC.

8. A stabilizer mixture for stabilizing chlorine-containing polymers, consisting of
a) a sulfate ester salt or sulfonate salt of formula (I)
[R(O)ₛSO₃]ₜM (I)
b) an alkanolamine of formula (II) 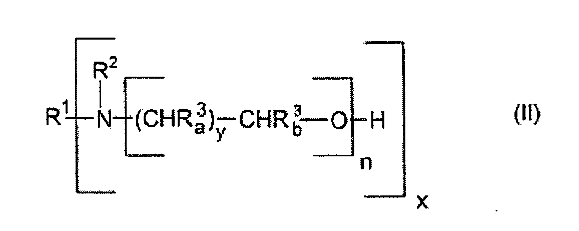 wherein: M = Li, Na, K, Mg, Ca, Sr, Ba, Zn, Al, La or Ce, t = valency of the metal cation, namely 1, 2 or 3; s = 0 or 1 and R = C₁-C₂₂ alkyl, phenyl, C₇-C₁₀ phenylalkyl, C₇-C₂₄ alkylphenyl
and
x = 1, 2 or 3;
y = 1, 2, 3, 4, 5 or 6;
n = 1-10;
R¹, R² = independently of one another H, C₁-C₂₂ alkyl, -[-(CHR³ₐ)_{y}-CHR³_{b}-O-]ₙ-H, -[-(CHR³ₐ)_{y}-CHR³_{b}-O-]ₙ-CO-R₄, C₂-C₂₀ alkenyl, C₂C₁₈ acyl, C₄-C₈ cycloalkyl, which may be OH-substituted in the ß position, C₆-C₁₀ aryl, C₇-C₁₀ alkaryl or C₇-C₁₀ aralkyl, or when x=1, R¹ and R² together with the N may additionally form a closed 4-10 membered ring of carbon atoms and optionally up to 2 heteroatoms, or when x=2, R¹ may additionally stand for C₂-C₁₈ alkylene which may be OH-substituted at both ß-carbon atoms and/or may be interrupted by 1 or more O-atoms and/or 1 or more NR² groups, or for dihydroxy-substituted tetrahydrodicyclopentadienylene, dihydroxy-substituted ethylcyclohexanylene, dihydroxy-substituted 4,4'-(bisphenol A-dipropyl ether)ylene, isophoronylene, dimethylcyclohexanylene, dicyclohexylmethanylene, or 3,3'-dimethyldicyclohexylmethanylene, and if x=3, R¹ may additionally stand for trihydroxy-substituted (tri-N-propyl isocyanurate)triyl; R³ₐ, R³_{b} = independently of one another C₁-C₂₂ alkyl, C₂-C₆ alkenyl, C₆-C₁₀ aryl, H or CH₂-X-R⁵, wherein X = O, S, -O-CO- or -CO-O-;
R⁴ = C₁-C₁₈ alkyl/alkenyl or phenyl; and
R⁵ = H, C₁-C₂₂ alkyl, C₂-C₂₂ alkenyl or C₆-C₁₀ aryl.

9. The stabilizer mixture according to claim 8, wherein in the compound of general formula (II)
R³ₐ and R³_{b} are, independently of one another, H or CH₃, and y = 1.

10. The stabilizer mixture according to claim 8 or 9, wherein in the compound of formula (II)
R¹ = R² = CH₂-CHR³_{b}-OH.

11. The stabilizer mixture according to any of claims 8 to 10, wherein the compounds of general formula (II) are tris(2-hydroxy-1-propyl)amine, tris(2-hydroxyethyl)amine, bis(2-hydroxyethyl)(2-hydroxy-1-propyl)amine or alkyl/alkenyl-bis(2-hydroxyethyl)amine, N-oleyl-bis(2-hydroxyethyl)amine, N-(2-hydroxyhexadecyl)-diethanolamine, N-(2-hydroxy-3-octyloxypropyl)-diethanolamine, N-(2-hydroxy-3-decyloxypropyl)diethanolamine or mixtures thereof.

12. The stabilizer mixture according to any of claims 8 to 11, wherein in the sulfate ester salt or sulfonate salt
M = Na or K and t = 1.

## Revendications

1. Utilisation d'un mélange de stabilisants pour la stabilisation de polymères chlorés, le mélange de stabilisants comprenant au moins
a) un sel d'ester sulfate ou un sel de sulfonate de formule (I)
[R(O)ₛSO₃]ₜM (I)
b) et une alcanolamine de formule (II) 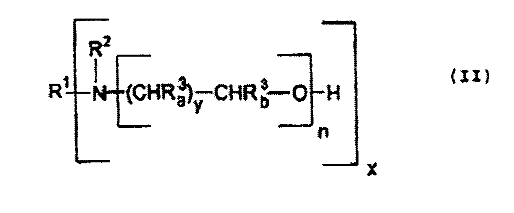 formules dans lesquelles : M = cation d'alcalin, d'alcalinoterreux, de lanthanide (Ce) ou d'aluminium, t = valence du cation métallique, à savoir 1, 2 ou 3 ; s = 0 ou 1 et R = C₁-C₂₂-alkyle, phényle, C₇-C₁₀-phénylalkyle, C₇-C₂₄-alkylphényle,
et
x = 1, 2 ou 3 ;
y = 1, 2, 3, 4, 5 ou 6 ;
n = 1-10;
R¹, R² = de manière mutuellement indépendante H, C₁-C₂₂-alkyle, -[-(CHR³ₐ)_{y}-CHR³_{b}-O-]ₙ-H, -[-(CHR³ₐ)y-CHR³_{b}-O-]ₙ-CO-R⁴, C₂-C₂₀-alkényle, C₂-C₁₈-acyle, C₄-C₈-cycloalkyle, qui en position β peut être substitué OH, C₆-C₁₀-aryle, C₇-C₁₀-alkaryle ou C₇-C₁₀-aralkyle, ou si x = 1, R¹ et R² peuvent former en supplément, ensemble et avec N, un anneau fermé, de 4 - 10 éléments, d'atomes de carbone et éventuellement jusqu'à 2 hétéro-atomes, ou si x = 2, R¹ peut en supplément représenter C₂-C₁₈-alkylène, qui, au niveau des deux atomes de carbone β peut être substitué par OH et/ou peut être interrompu par 1 ou plusieurs atome d'O et/ou 1 ou plusieurs groupes NR², ou représenter tétrahydro-dicyclopentadiènylène substitué dihydroxy, éthylcyclohexanylène substitué dihydroxy, 4,4'-(bisphénol-A-dipropyléther)ylène substitué dihydroxy, isophoronylène, diméthylcyclohexanylène, dicyclohexylméthany-lène ou 3,3'-diméthyldicyclohexyle-méthanylène, et si x = 3, R¹ peut en supplément représenter (tri-N-propylisocyanurate)triyle substitué trihydroxy ;
R³ₐ, R³_{b} = de manière mutuellement indépendante C₁-C₂₂-alkyle, C₂-C₆-alkényle, C₆-C₁₀-aryle, H ou CH₂-X-R⁵, avec X = O, S,
-O-CO ou -CO-O ;
R⁴ = C₁-C₁₈-alkyle/alkényle ou phényle ; et
R⁵ = H, C₁-C₂₂-alkyle, C₂-C₂₂-alkényle ou C₆-C₁₀-aryle.

2. Utilisation selon la revendication 1, dans laquelle dans le composé de formule générale (II)
R³ₐ et R³_{b} sont indépendamment l'un de l'autre H ou CH₃, et y = 1.

3. Utilisation selon l'une des revendications 1 ou 2, dans laquelle dans le composé de formule générale (II)
R¹ = R² = CH₂-CHR³_{b}-OH.

4. Utilisation selon l'une des revendications 1 à 3, dans laquelle les composés de formule générale (II) sont tris(2-hydroxy-1-propyle)amine, tris(2-hydroxyétyle)amine, bis(2-hydroxyéthyle)-2-hydroxy-1-propyle)amine ou alkyle/alkényle-bis(2-hydroxyétyle)amine, N-oléyle-bis(2-hydroxyétyle)amine, N-(2-hydroxyhexadécyle)diéthanolamine, N-(2-hydroxy-3-octyloxy-propyle) diéthanolamine, N-(2-hydroxy-3-décyloxy-propyle)diéthanolamine ou des mélanges de celles-ci.

5. Utilisation selon l'une des revendications 1 à 4, dans laquelle dans le sel d'ester sulfate ou le sel de sulfonate, M = Na ou K, et t = 1.

6. Utilisation selon l'une des revendications précédentes, dans laquelle le polymère chloré constitue du PVC mou.

7. Utilisation selon l'une des revendications 1 à 5, dans laquelle le polymère chloré constitue du PVC dur.

8. Mélange de stabilisants pour la stabilisation de polymères chlorés, constitué
a) d'un sel d'ester sulfate ou d'un sel de sulfonate de formule (I)
[R(O)ₛSO₃]ₜM (I)
b) et d'une alcanolamine de formule (II) 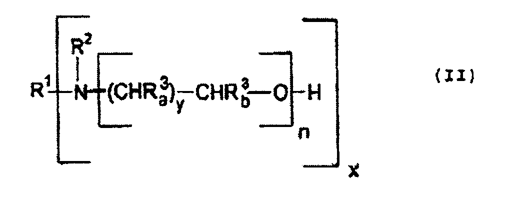 formules dans lesquelles : M = Li, Na, K, Mg, Ca, Sr, Ba, Zn, Al, La ou Ce, t = valence du cation métallique, à savoir 1, 2 ou 3 ; s = 0 ou 1 et R = C₁-C₂₂-alkyle, phényle, C₇-C₁₀-phénylalkyle, C₇-C₂₄-alkylphényle,
et
x = 1, 2 ou 3 ;
y = 1, 2, 3, 4, 5 ou 6 ;
n = 1-10 ;
R¹, R² = de manière mutuellement indépendante H, C₁-C₂₂-alkyle, -[-(CHR³ₐ)_{y}-CHR³_{b}-O-]ₙ-H, -[-(CHR³ₐ)y-CHR³_{b}-O-]ₙ-CO-R⁴, C₂-C₂₀-alkényle, C₂-C₁₈-acyle, C₄-C₈-cycloalkyle, qui en position β peut être substitué OH-, C₆-C₁₀-aryle, C₇-C₁₀-alkaryle ou C₇-C₁₀-aralkyle, ou si x = 1, R¹ et R² peuvent former en supplément, ensemble et avec N, un anneau fermé, de 4 - 10 éléments, d'atomes de carbone et éventuellement jusqu'à 2 hétéro-atomes, ou si x = 2, R¹ peut en supplément représenter C₂-C₁₈-alkylène, qui, au niveau des deux atomes de carbone β peut être substitué par OH et/ou peut être interrompu par 1 ou plusieurs atome d'O et/ou 1 ou plusieurs groupes NR², ou représenter tétrahydro-dicyclopentadiènylène substitué dihydroxy, éthylcyclohexanylène substitué dihydroxy, 4,4'-(bisphénol-A-dipropyléther)ylène substitué dihydroxy, isophoronylène, diméthylcyclohexanylène, dicyclohexylméthanylène ou 3,3'-diméthyldicyclohexyle-méthanylène, et si x = 3, R¹ peut en supplément représenter (tri-N-propylisocyanurate)triyle substitué trihydroxy ;
R³ₐ, R³_{b} = de manière mutuellement indépendante C₁-C₂₂-alkyle, C₂-C₆-alkényle, C₆-C₁₀-aryle, H ou CH₂-X-R⁵, avec X = O, S,
-O-CO ou -CO-O ;
R⁴ = C₁-C₁₈-alkyle/alkényle ou phényle ; et
R⁵ = H, C₁-C₂₂-alkyle, C₂-C₂₂-alkényle ou C₆-C₁₀-aryle.

9. Mélange de stabilisants selon la revendication 8, dans lequel dans le composé de formule générale (II)
R³ₐ et R³_{b} sont indépendamment l'un de l'autre H ou CH₃, et y = 1.

10. Mélange de stabilisants selon l'une des revendications 8 ou 9, dans lequel dans le composé de formule générale (II)
R¹ = R² = CH₂-CHR³_{b}-OH.

11. Mélange de stabilisants selon l'une des revendications 8 à 10, dans lequel les composés de formule générale (II) sont tris(2-hydroxy-1-propyle)amine, tris(2-hydroxyétyle)amine, bis(2-hydroxyéthyle)-2-hydroxy-1-propyle)amine ou alkyle/alkényle-bis(2-hydroxyétyle)amine, N-oléyle-bis(2-hydroxyétyle)amine, N-(2-hydroxyhexadécyle)diéthanolamine, N-(2-hydroxy-3-octyloxy-propyle) diéthanolamine, N-(2-hydroxy-3-décyloxy-propyle)diéthanolamine ou des mélanges de celles-ci.

12. Mélange de stabilisants selon l'une des revendications 8 à 11, dans lequel dans le sel d'ester sulfate ou le sel de sulfonate, M = Na ou K, et t = 1.
